# EUROPEAN PATENT APPLICATION

(11) **EP 3 685 792 A1**
(43) Date of publication of application: **29.07.2020**
(21) Application number: 19153664.8
(22) Date of filing: 25.01.2019
(51) Int. Cl.: A61C 5/66

(54) **CAPSULE FOR LOW VISCOSITY COMPOUNDS, PISTON FOR A USAGE WITH A CAPSULE AND SYSTEM COMPRISING A CAPSULE AND A PISTON**

(71) Applicant: Sulzer Mixpac AG, 9469 Haag (Rheintal) (CH)
(72) Inventor: Tiekenheinreich, Lars, 24147 Kiel (DE)
(74) Representative: Manitz Finsterwald Patent- und Rechtsanwaltspartnerschaft mbB

(57) **Abstract**

The present invention relates to a capsule for low viscosity compounds with a housing, the housing comprising a storage section with a storage volume for a storage of the compound and an application section with an application channel for an application of the compound, wherein the filling end of the storage volume is placed at a filling opening of the housing and is accessible from outside of the housing for a filling of the storage volume with the compound, wherein the application end of the application channel is placed at an application opening of the housing and is accessible from outside of the housing for an application of the compound. Further, the present invention relates to a piston for a usage with such a capsule and to a system comprising such a capsule and preferably such as piston.

## Description

The present invention relates to a capsule for low viscosity compounds, in particular liquid compounds, preferably for dental compounds, with a housing, the housing comprising a storage section with a storage volume for a storage of the compound and an application section with an application channel for an application of the compound, wherein the storage volume comprises a filling end and a discharging end and the application channel comprises a storage end and an application end, wherein the storage volume comprises an essentially cylindrical middle section located between the filling end and the discharging end to provide a piston guide for a piston inserted into the storage volume, wherein the discharging end of the storage volume and the storage end of the application channel are connected in a fluid communicating way, wherein the filling end of the storage volume is placed at a filling opening of this housing and is accessible from outside of the housing for a filling of the storage volume with the compound, wherein the application end of the application channel is placed at an application opening of the housing and is accessible from outside of the housing for an application of the compound. Further, the present invention relates to a piston for a usage with such a capsule, wherein the piston is adapted to be inserted into the storage volume, wherein a compound in the storage volume is forceable into the application channel by a movement of the piston in the storage volume towards the application end of the storage volume, and wherein the piston forms a closing means to be inserted into the filling opening of the housing of the capsule. In addition, the present invention is related to a system comprising such a capsule and preferably such a piston.

Capsules are commonly used for storage and application of compounds of various viscosities. Capsules often comprise a storage volume, in which the compound in question can be stored. A piston inserted into the capsule, especially into the storage volume of the capsule, can be used to force the compound into and/or through an application channel of the capsule for an application of the compound. Especially dental compounds can be stored in and applicated by such capsules. A system comprising a capsule and a piston for instance can be inserted into a respective composite gun, wherein the composite gun can actuate the piston and therefore trigger the actual application procedure.

During filling of a capsule with a compound, storage of a filled capsule and application of the compound, a sealing of the capsule, especially of a filling opening of the capsule, has to be provided. Without sealing, the compound filled into and/or stored in the capsule can leak out of the capsule. Also air can enter the capsule, especially the storage volume of the capsule, and reduce the lifetime of the compound stored therein. Additionally, also a contamination of the compound filled into and/or stored in the capsule is possible. Especially for low viscosity compounds, for instance liquids, a reliable sealing has to be provided.

In view of the above, it is an object of the present invention to provide an improved capsule, an improved piston and an improved system, which do not have the aforementioned drawbacks of the state of the art. In particular, it is an object of the present invention to provide a capsule, a piston and a system for low viscosity compounds, which comprise an improved sealing in an especially easy and cost-efficient way.

This object is satisfied by the patent claims. In particular, this object is satisfied by a capsule for low viscosity compounds according to claim 1, by a piston for a usage with a capsule according claim 9 and by a system comprising a capsule and piston according to claim 14. The dependent claims describe preferred embodiments of the invention. Details and advantages described with respect to a capsule according to the first aspect of the invention also hold true for a piston according to the second aspect of the invention and for a system according to the third aspect of the invention and vice versa, if of technical sense.

According to a first aspect of the invention, the object is satisfied by a capsule for low viscosity compounds, in particular liquid compounds, preferably for dental compounds, with a housing, the housing comprising a storage section with a storage volume for a storage of the compound and an application section with an application channel for an application of the compound, wherein the storage volume comprises a filling end and a discharging end and the application channel comprises a storage end and an application end, wherein the storage volume comprises an essentially cylindrical middle section located between the filling end and the discharging end to provide a piston guide for a piston inserted into the storage volume, wherein the discharging end of the storage volume and the storage end of the application channel are connected in a fluid communicating way, wherein the filling end of the storage volume is placed at a filing opening of the housing and is accessible from outside of the housing for a filling of the storage volume with the compound, wherein the application end of the application channel is placed at an application opening of the housing and is accessible from outside of the housing for an application of the compound. A capsule according to the invention is characterized in that an inner surface of the storage volume comprises first sealing means at and/or near the filling end of the storage volume for providing a seal of the storage volume with respect to a closing means inserted into the filling opening of the housing, wherein the first sealing means comprise one or more, in particular two or more, preferably three or more, circumferential protrusions projecting from the inner surface toward a longitudinal axis of the storage section.

A capsule according to the invention can be used for a storage and/or application of especially low viscosity compounds, in particular liquid compounds, preferably dental compounds. The respective compound can be filled into a storage volume through a filling opening of the housing of the capsule. The storage volume is located in a storage section of the capsule, wherein the storage volume comprises a filling end at the filling opening of the housing. The main part of the storage volume is a middle section of the storage volume, which is preferably essentially cylindrically shaped. This cylindrical shape allows a guidance of a piston within the storage volume, essentially beginning at the filling end of the storage volume towards a discharging end of the storage volume.

Connected to the discharging end of the storage volume in a fluid communicating way is a storage end of an application channel of an application section of the housing of the capsule. The compound can be forced by a movement of the piston via the discharging end of the storage volume into the storage end of the application channel, through the application channel and out of an application end of the application channel. This application end of the application channel placed at an application opening of the housing, preferably the application end is essentially identical to the application opening of the housing. An application of the compound stored in the storage volume of the capsule via an application opening, for instance onto a tooth of a patient, can therefore be provided.

To prevent leaking out of the compound filled into the storage volume and also of a possible contamination of the compound in the storage volume, a sealing of the storage volume, especially of the filling end of the storage volume and/or the filling opening of the housing, against a closing means inserted into the filling opening and the filling end, respectively, is necessary.

According to the invention, first sealing means are comprised at an inner surface of the storage volume at and/or near the filling end of the storage volume. These first sealing means can provide a sealing of the storage volume against a closing means inserted into the filling opening of the housing and/or into the filling end of the storage volume. According to the invention, these first sealing means are part of the housing of the capsule. Therefore, the first sealing means arranged at the inner surface of the storage volume allow a sealing against any closing means inserted into the filling opening of the housing and/or the filling end of the storage volume. Especially, the sealing can be provided for instance already during the filling of the storage volume of the capsule, in which a filling nozzle of a filling apparatus is inserted into the filling opening of the housing as a closing means. After that, the first sealing means arranged at the inner surface of the storage volume comprise a sealing against a piston inserted as a closing means into the filling opening of the housing, for instance for a storage of the filled capsule. Separate sealing means, provided as part of each of the different closing means, can therefore be avoided.

Preferably, the first sealing means according to the invention comprise one or more, in particular two or more, preferably three or more, circumferential protrusions at the inner surface. These protrusions can for instance comprise an at least partly circular and/or elliptical cross section. Additionally or alternatively, the protrusions can also be formed as sealing lips. As the storage volume often comprises a circular cross section, see for instance the essentially cylindrical middle section or also conical parts of the storage volume placed and/or near the filling end of the storage volume, a circumferential protrusion and comprise a continuous sealing along the edge of the storage volume. The overall sealing of the storage volume can therefore be improved. By providing more than one, in particular more than two, preferably more than three protrusions, the resulting sealing provided by a capsule according to the invention can further be improved.

In summary, a capsule according to the invention can provide an improved sealing of a filling opening of the housing of the capsule and/or of a filling end of the storage volume of the capsule. Especially, by providing first sealing means at an inner surface of the storage volume, the sealing of the storage volume can be provided independently from the respective closing means inserted into the filling opening of the housing.

Preferably, a capsule according to the invention can be improved by that the first sealing means and the inner surface of the storage volume, in particular the storage section, preferably the housing, are composed of the same material. By using the same material for the first sealing means and at least the inner surface of the storage volume, a production of a capsule according to the invention can be simplified. The number of necessary production steps for manufacturing the sealing means and the inner surface, the storage volume and/or the housing, respectively, can be minimized or at least be drastically reduced. Especially, for instance a molding process, especially an injection molding process, can be used to produce the capsule including the first sealing means in a single production step.

Additionally, a capsule according to the invention can be characterized in that the housing is composed of at least one of the following plastic materials, wherein the plastic material is of medical grade:
- Polybutylene terephthalate (PBT)
- Polymethyl methacrylate (PMMA)
- Polyamide (PA)
- Cyclic olefin copolymer (COC)
- Cyclic olefin polymer (COP)
As a capsule according to the invention is often used for dental compounds, it is necessary that a reaction between the material of the capsule, especially the material of the storage volume, and the compound filled into and/or stored in the storage volume can be prohibited. By using a medical grade plastic material for the housing, such an interaction between the material of the housing and the compound stored in the storage volume can be avoided. The listed plastic materials have in common that they are firm and rigid. Hence sharp edges and/or defined outlines of the capsule needed for spraying the low viscosity compound can easily be provided.

Further, a capsule according to the invention can be characterized in that the application section comprises application sealing means for providing a sealing of the application channel, preferably placed at and/or near the application end of the application channel. The first sealing means of a capsule according to the invention can provide a sealing against a closing means inserted into the filling opening of the housing. As described above, a capsule according to the invention comprises a continuous channel, starting at the filling end of the storage volume, continuing by the fluidly connected discharging end of the storage volume and storage end of the application channel and ending at the application end of the application channel. Providing application sealing means at the application section, preferably placed at and/or near the application end of the application channel, a sealing of the second end of the aforementioned continuous channel within the capsule according to the invention can be provided. A prevention of a leaking out and/or a contamination of the compound stored in the storage volume of the capsule can therefore be improved.

A capsule according to the invention can further be improved by that the application sealing means comprise at least one of the following items:
- welding seem
- heat sealing
- cap
- plug
- foil cover.

This list is open and also other items can be used for application sealing means if these make technical sense. Especially, an application sealing means adapted to the embodiment of the application end of the application channel can be chosen.

Further, a capsule according to the invention can be improved by that the foil cover comprises a multi-component foil. In such a multi-component foil, different foil elements with different features can be combined into a single multi-component foil. Each of the foil elements of the multi-component foil can provide different and especially specialized features. For instance, one of the components can be light-proof, another component can be tight, especially vapor tight, and, preferably the innermost component which will be in contact with the application opening, can be of a medical grade. Therefore, especially a foil cover adapted to the compound stored in the storage volume of the capsule can be provided.

Preferably, a capsule according to the invention can be improved by that the application sealing means, in particular the cap and/or the plug and/or the foil cover, are at least partly made of polybutylene terephthalate (PBT) and/or at least partly made of cyclic olefin polymer (COP), in particular of cyclic olefin copolymer (COC). Polybutylene terephthalate, cyclic olefin polymer and/or cyclic olefin copolymers are especially easy to handle and can easily be produced in several shapes and adapted to the special needs of the respective application sealing means. Therefore these materials are especially preferred to be used as materials of at least parts of the application sealing means.

In another embodiment of a capsule according to the invention, the capsule can be characterized in that the storage volume comprises a cardinal volume orientation and the application channel comprises a cardinal channel orientation, and wherein the cardinal volume orientation angles the cardinal channel orientation at an angle between 10° and 60°. The cardinal volume orientation can preferably be identical or at least almost identical to the longitudinal axis. In other words, a direction of the application channel present at the application end of the application channel is preferably different to the direction of the storage volume present at its filling end. This allows during an application of a compound using a capsule according to the invention to reach target surfaces which otherwise, especially with completely aligned cardinal orientations of the storage volume and the application channel, are impossible to be reached. Especially for dental compounds this allows to easily reach all or at least essentially all areas within a mouth of a patient.

The first sealing means may comprise one or more, in particular two or more, preferably three or more, circumferentially extending sealing lips. Such sealing lips can be manufactured in a simple manner during the process of making the capsule.

The sealing lip may be formed either by integrally forming the sealing lip from the same material as that of the capsule or by forming the sealing lip from a further material. The sealing lips may have a rounded shape projecting from the inner surface toward a longitudinal axis of the storage section. In this way an improved seal can be made available between the piston and the capsule.

The sealing lips may have a part circular cross-section in a plane perpendicular to the inner surface. Such shapes are simple to manufacture e.g. in an injection molding process.

The size of the sealing lip generally depends on the shape, size and material of the piston respectively of the capsule. The size may be selected such that the sealing lip projects by at most 2 mm from the inner surface of the capsule, preferably by 0.2 to 1.5 mm especially by 0.4 to 1.2 mm from the inner surface of the capsule to ensure a seal between the capsule and the piston.

According to a second aspect of the invention, the object is satisfied by a piston for a usage with a capsule according to the first aspect of the invention, wherein the piston is adapted to be inserted into the storage volume, wherein a compound in the storage volume is forceable into the application channel by a movement of the piston in the storage volume towards the application end of the storage volume, and wherein the piston forms a closing means to be inserted into the filling opening of the housing of the capsule.

A piston according to the second aspect of the invention is intended to be used in and/or with a capsule according to the first aspect of the invention. Therefore a piston according to the second aspect of the invention can provide all features and advantages already described in detail with respect to a capsule according to the first aspect of the invention.

As a piston according to the second aspect of the invention can be used in and/or within a capsule according to the first aspect of the invention, in other words the storage volume of the capsule forms a piston guide to guide the piston according to the second aspect of the invention within the storage volume. A movement of the piston through the storage volume from the filling end of the storage volume towards the discharging end of the storage volume forces a compound stored in the storage volume through the discharging end of the storage volume via the storage end of the application channel into the application channel and later on out of the application end of the application channel for an application of the compound. The movement of the piston within the storage volume of the capsule can for instance be actuated by a standard composite gun.

Essentially, a piston according to the second aspect of the invention forms a closing means to be inserted into the filling opening of the housing of the capsule according to the first aspect of the invention. In other words, the first sealing means arranged at the inner surface of the storage volume of the capsule according to the first aspect of the invention seal the storage volume by contacting the piston inserted into the filling opening as closing means. A secure and tight sealing of the filling end of the storage volume and/or the filling opening of the housing of the capsule according to the first aspect of the invention can therefore be provided.

Preferably, a piston according to the invention comprises second sealing means to engage the first sealing means for a sealing of the storage volume. This second sealing means are preferably that part of the piston which can contact the first sealing means of the capsule. An overall sealing of the filing end of the storage volume and/or the filling opening of the housing can therefore be improved.

In a preferred embodiment of a piston according to the invention, the second sealing means are a circumferential sealing surface of the piston. For instance, a piston according to the invention can be essentially of a cylindrical shape, wherein the side of the cylinder provides at least partly a circumferential sealing surface. By providing a circumferential sealing surface it can be ensured that the circumferential protrusions as part of the first sealing means completely contact the second sealing means, especially the circumferential sealing surface, of the piston. A further improvement or at least an overall simplification of the sealing provided at the filling end of the storage volume and/or the filling opening of the housing can therefore be provided.

Additionally, a piston according to the invention can be characterized in that the piston comprises a venting hole, in particular a sealable venting hole. As the piston is inserted into the filling opening of the housing, it is possible, that air is confined between the piston and compound already filled into the storage volume. A venting hole as part of the piston allows this air to escape during an insertion of the piston into the filling opening of the housing. Especially, the air has not to escape through the sealing provided by the first and if present second sealing means. After completion of the insertion of the piston into the filling opening, the venting hole itself can be sealed, for instance with a foil cover, a plug, by gluing and/or by welding.

Further, a piston according to the invention can be characterized in that the piston is at least partly made of polybutylene terephthalate (PBT) and/or at least partly made of cyclic olefin polymer (COP), in particular of cyclic olefin copolymer (COC). As already mentioned above, these particular materials are easy to handle and can be provided easily in different shapes.

In a third aspect of the invention, the object is satisfied by a system comprising a capsule and a piston, wherein the capsule is provided according to the first aspect of the invention and preferably the piston is provided according to the second aspect of the invention. By providing a capsule according to the first aspect of the invention and/or a piston according to the second aspect of the invention, a system according to the third aspect of the invention can provide all features and advantages which are described above in detail according to a capsule according to the first aspect of the invention and/or a piston according to the second aspect of the invention.

Further, a system according to the invention can be characterized in that the storage volume of the capsule contains a low viscosity compound, in particular a liquid compound, preferably a dental compound, wherein the filling opening of the housing is sealingly closed by the piston. As a system according to the third aspect of the invention comprises a capsule according to the first aspect of the invention, first sealing means are present at an inner surface of the storage volume of the capsule. By inserting a piston into the filling opening, the piston acts as closing means and engages with the first sealing means and therefore a sealing can be provided. The low viscosity compound, in particular the liquid compound, preferably the dental compound, is sealing confined within a system according to the invention. Especially a leaking of the compound out of the system and/or a contamination of the compound already filled into the capsule of the system can be prohibited.

The present invention is further described hereinafter with reference to illustrated embodiments shown in the accompanying drawings.

There is shown:
- Fig. 1: a sectional view of a system according to the invention, and
- Fig. 2: an isometric view of a system according to the invention.

Elements of the same function are specified throughout the figures with the same reference signs. In the following, any statement made having regard to the direction of a component is made relative to the position in the drawing and can naturally wherein the actual position. The description of the accompanying drawing is only by the way of detail. Specific features of each aspect of the present invention and of the figures can be combined with each other if of technical sense.

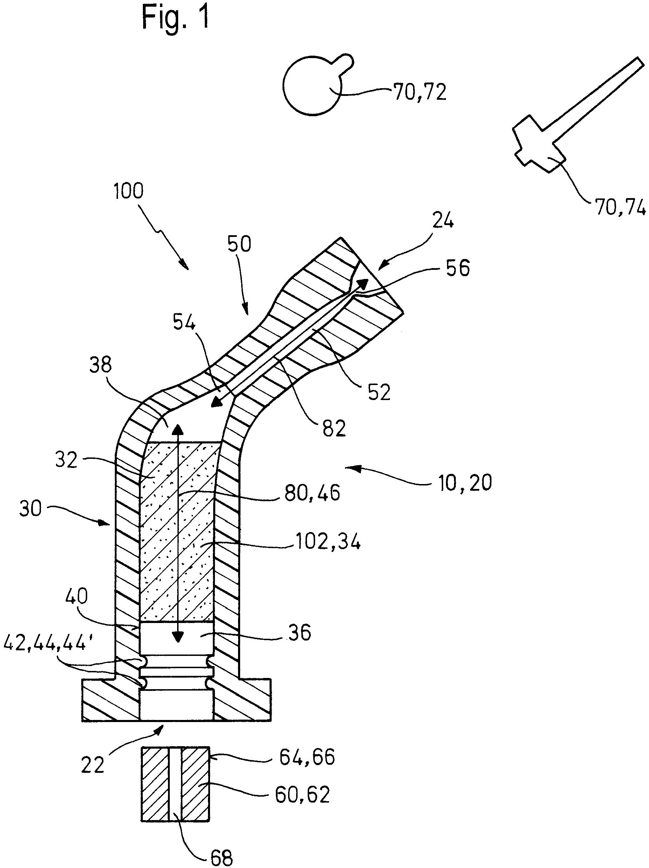

Fig. 1 shows a system 100 according to the present invention in a sectional view. The system 100 at least comprises a capsule 10 according to the invention and, as shown in Fig. 1, preferably also a piston 60 according to the invention. The system 100, especially the capsule 10, is used to store and to applicate compounds 102, especially low viscosity compounds 102, preferably compounds 102 for dental applications. These compounds 102 can be stored in a storage volume 32 of a storage section 30.

The storage section 30 is part of the housing 20 of the capsule 10. The compound 102 is stored in an essentially cylindrical middle section 34 of the storage volume 32, the storage section 30 and the storage volume 32 having a longitudinal axis 46. The longitudinal axis 46 can preferably be identical or at least almost identical to the cardinal volume orientation 80. For a filing of the storage volume 32, a filling opening 22 in the housing 20 and respectively a filling end 36 of the storage volume 32 is used. The compound 102 is inserted into the storage volume 32 and can fill the storage volume 32 essentially from is its filling end 36 up to its discharging end 38.

The discharging end 38 of the storage volume is connected to a storage end 54 of an application channel 52 of a capsule 10 in a fluid communication way. The application channel 52 is located in an application section 50 of the housing 20 of the capsule 10. For instance by a movement of the piston 60 in the storage volume 32 along the longitudinal axis 46 towards the discharging end 38 of the storage volume 32, the compound 102 is forced in direction to the discharging end 38 and into the application channel 52. In the application channel 52 the compound 102 is guided to an application end 56 of the application channel 52 and a respective application opening 24 of the housing 20 of the capsule 10. An application of the compound 102 can therefore be easily provided. Preferably, a cardinal volume orientation 80 of the storage volume 32 and a cardinal channel orientation 82 of the application channel 52 are arranged at an angle between 10° and 60° to allow an application of the compound 102 at regions otherwise not reachable.

Preferably, at least the housing 20 is composed of medical grade plastic material like PBT, PMMA, PA, COC and/or COP. For a sealing of the application end 56 and the application opening 52, respectively, an application sealing means 70 can be provided, for instance and as shown in Fig. 1, a foil cover 72 or a plug 74. Preferably, the foil cover 72 can comprise a multi-component foil. Especially, the application sealing means 70 can be at least partly made of PBT and/or COP and/or COC.

According to the invention, the storage volume 32 of the capsule 10 comprises first sealing means 42 at an inner surface 40 of the storage volume 32, preferably at and/or near the filling end 36 of the storage volume 32. These first sealing means 42 can preferably be provided as protrusions 44. Further, the inner surface 40 of the storage volume 32, preferably the complete housing 20, and the first sealing means 42 are composed of the same material. By providing first sealing means 42 as part of the storage volume 32, a sealing of the storage volume 32 can be provided independently of the closing means 62 inserting into the filling end 36 of the storage volume 32.

The protrusions 44 are formed in one piece with the inner surface 40 and project from the inner surface 40 towards the longitudinal axis 46 and/or the cardinal volume orientation 80. Two protrusions 44 formed as sealing lips 44' are shown in Fig. 1 that extend circumferentially along the inner surface 40.

As shown in Fig. 1, a piston 60 can be used as a closing means 62. Preferably, the piston 60 comprises second sealing means 64, for instance a circumferential sealing surface 66, to engage the first sealing means 42 and to therefore enhance the provided sealing. Additionally, the piston 60 can comprise a sealable venting hole 68 to allow air trapped within the storage volume 32 to escape. Also the piston 60 can be at least partly made of PBT, COP and/or COC.

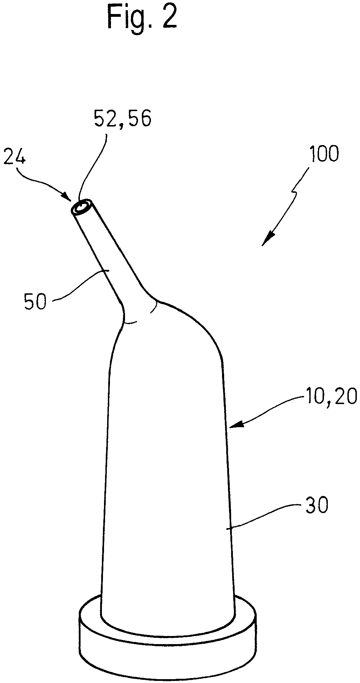

In Fig. 2 an isometric view of a system 100 according to the invention is shown. Within the housing 20 of the capsule 10, especially within the storage section 30, a storage volume 32 and additionally a compound 102 (both not shown) are located. At one end of the housing 20 of the capsule 10, an application section 50 is visible, wherein the application section 50 ends in an application opening 24 of the housing 20, whereby especially an application end 56 of the application channel 52 is placed at the application opening 24.

### Reference list

- 10: Capsule

- 20: housing
- 22: filling opening
- 24: application opening

- 30: storage section
- 32: storage volume
- 34: middle section
- 36: filling end
- 38: discharging end
- 40: inner surface
- 42: first sealing means
- 44: protrusion
- 44': sealing lip
- 46: axis

- 50: application section
- 52: application channel
- 54: storage end
- 56: application end

- 60: piston
- 62: closing means
- 64: second sealing means
- 66: sealing surface
- 68: venting hole
- 70: application sealing means
- 72: foil cover
- 74: plug

- 80: volume orientation
- 82: channel orientation

- 100: System
- 102: compound

## Claims

1. Capsule (10) for low viscosity compounds (102), in particular liquid compounds (102), preferably for dental compounds (102), with a housing (20), the housing (20) comprising a storage section (30) with a storage volume (32) for a storage of the compound (102) and an application section (50) with an application channel (52) for an application of the compound (102),
wherein the storage volume (32) comprises a filling end (36) and a discharging end (38) and the application channel (52) comprises a storage end (54) and an application end (56),
wherein the storage volume (32) comprises an essentially cylindrical middle section (34) located between the filling end (36) and the discharging end (38) to provide a piston guide for a piston (60) inserted into the storage volume (32),
wherein the discharging end (38) of the storage volume (32) and the storage end (54) of the application channel (52) are connected in a fluid communicating way,
wherein the filling end (36) of the storage volume (32) is placed at a filling opening (22) of the housing (20) and is accessible from outside of the housing (20) for a filling of the storage volume (32) with the compound (102),
wherein the application end (56) of the application channel (52) is placed at an application opening (22) of the housing (20) and is accessible from outside of the housing (20) for an application of the compound (102),
**characterized in that**
an inner surface (40) of the storage volume (32) comprises first sealing means (42) at and/or near the filling end (36) of the storage volume (32) for providing a seal of the storage volume (32) with respect to a closing means (62) inserted into the filling opening (22) of the housing (20), wherein the first sealing means (42) comprise one or more, in particular two or more, preferably three or more, circumferential protrusions (44) projecting from the inner surface (40) toward a longitudinal axis (46) of the storage section (30).

2. The capsule (10) of claim 1, wherein the first sealing means (42) and the inner surface (40) of the storage volume (32), in particular the storage section (30), preferably the housing (20), are composed of the same material.

3. The capsule (10) of claim 1 or 2, wherein the housing (20) is composed of at least one of the following plastic materials, wherein the plastic material is of medical grade:
- Polybutylene terephthalate (PBT)
- Polymethyl methacrylate (PMMA)
- Polyamide (PA)
- Cyclic olefin copolymer (COC)
- Cyclic olefin polymer (COP).

4. The capsule (10) of one of the preceding claims, wherein the application section (50) comprises application sealing means (70) for providing a sealing of the application channel (52), preferably placed at and/or near the application end (56) of the application channel (52).

5. The capsule (10) of claim 4, wherein the application sealing means (70) comprise at least one of the following items:
- welding seam
- heat sealing
- cap
- plug
- foil cover.

6. The capsule (10) of claim 5, wherein the foil cover comprises a multicomponent foil.

7. The capsule (10) of one of the preceding claims 4 to 6, wherein the application sealing means (70), in particular the cap and/or the plug and/or the foil cover, are at least partly made of polybutylene terephthalate (PBT) and/or at least partly made of cyclic olefin polymer (COP), in particular of cyclic olefin copolymer (COC).

8. The capsule (10) of one of the preceding claims, wherein the storage volume (32) comprises a cardinal volume orientation (80) and the application channel (52) comprises a cardinal channel orientation (82), and wherein the cardinal volume orientation (80) angles the cardinal channel orientation (82) at an angle between 10° and 60°; and/or
wherein the first sealing means (42) comprises one or more, in particular two or more, preferably three or more, circumferentially extending sealing lips (44'), optionally with the sealing lips (44') having a rounded shape projecting from the inner surface (40) toward a longitudinal axis (46) of the storage section (30), and/or with the sealing lips (44') having a part circular cross-section in a plane perpendicular to the inner surface (40).

9. Piston (60) for a usage with a capsule (10) according to one of the preceding claims 1 to 7, wherein the piston (60) is adapted to be inserted into the storage volume (32), wherein a compound (102) in the storage volume (32) is forceable into the application channel (52) by a movement of the piston (60) in the storage volume (32) towards the application end (56) of the storage volume (32), and wherein the piston (60) forms a closing means (62) to be inserted into the filling opening (22) of the housing (20) of the capsule (10).

10. The piston (60) according to claim 9, wherein the piston (60) comprises second sealing means (64) to engage the first sealing means (42) for a sealing of the storage volume (32).

11. The piston (60) according to claim 9 or 10, wherein the second sealing means (64) are a circumferential sealing surface (66) of the piston (60) .

12. The piston (60) according to one of the preceding claims 9 to 11, wherein the piston (60) comprises a venting hole (68), in particular a sealable venting hole (68).

13. The piston (60) according to one of the preceding claims 9 to 12, wherein the piston (60) is at least partly made of polybutylene terephthalate (PBT) and/or at least partly made of a cyclic olefin polymer (COP), in particular of a cyclic olefin copolymer (COC).

14. System (100) comprising a capsule (10) and a piston (60), wherein the capsule (10) is provided according to one of the preceding claims 1 to 8 and preferably the piston (60) is provided according to one of the preceding claims 9 to 13.

15. System (100) according to claim 14, wherein the storage volume (32) of the capsule (10) contains a low viscosity compound (102), in particular a liquid compound (102), preferably a dental compound (102), wherein the filling opening (22) of the housing (20) is sealingly closed by the piston (60).
